Europäisches Patentamt

**European Patent Office**

Office européen des brevets

(11) Publication number: **0 085 797**

**A1**

(12) # EUROPEAN PATENT APPLICATION

(21) Application number: **82300598.8**

(22) Date of filing: **08.02.82**

(51) Int. Cl.³: **A 01 K 91/04**

(43) Date of publication of application:
**17.08.83 Bulletin 83/33**

(84) Designated Contracting States:
**AT BE CH DE FR GB IT LI LU NL SE**

(71) Applicant: **Cardno, Andrew Third
Inver St. Cairns High Street
St. Combs(GB)**

(72) Inventor: **Cardno, John
28 Kandy Crescent
Ngaio Wellington(NZ)**

(74) Representative: **Pacitti, Pierpaolo A.M.E. et al,
Ian G. Murgitroyd and Company 49 Bath Street
Glasgow G2 2DL(GB)**

(54) Improvements in fishing tackle.

(57) There is described a fishing device for attaching fishing hooks to a fishing line (11) which has a yoke (10) for attachment to the fishing line and is provided with at least one trace (15) formed of a resilient material attached to the yoke and extending outwardly therefrom.

FIG 1

EP 0 085 797 A1

This invention relates to improvements in fishing tackle. When line fishing, that is when using set lines or hand lines, a fish hook or hooks are generally attached to the line by a trace or traces which are suitable knotted to the line. The line generally terminates in a sinker which is commonly a lead weight which gives the line the required negative buoyancy. One of the difficulties associated with such lines is that the hook with the trace, is liable to become entangled around the line and thereby diminish the likelihood of a fish taking the bait on the hook.

It is therefore an object of this invention to provide a means whereby one or more fish hooks can be positively laterally displaced from the line. Accordingly one form of the invention may be said to comprise a fishing device for attaching fish hooks to a fishing line comprising a yoke adapted to be attached to the fishing line with at least one trace formed of a resilient material attached to the yoke and extending outwardly therefrom.

Preferred forms of the invention will now be described with the aid of the accompanying drawings, wherein:

Fig. 1 is a view of one form of the invention;

Fig. 2 is a view of another form of the invention;

Fig. 3 is a view of yet another form of the invention;

Figs. 4 and 5 are views of a further form of the invention;

Fig. 6 is an end view of the form of the invention of Figs. 4 and 5;

-2-

Fig. 7 is a view of yet a further form of the invention showing an alternative trace attaching means;

Fig. 8 is an exploded cross-sectional view of the alternative trace attaching means of Fig. 7;

Fig. 9 shows a partial cross-sectional view of the alternative trace attaching means of Fig. 7 along line II-II;

Fig. 10. shows a partial cross-sectional view of a further alternative trace attaching means.

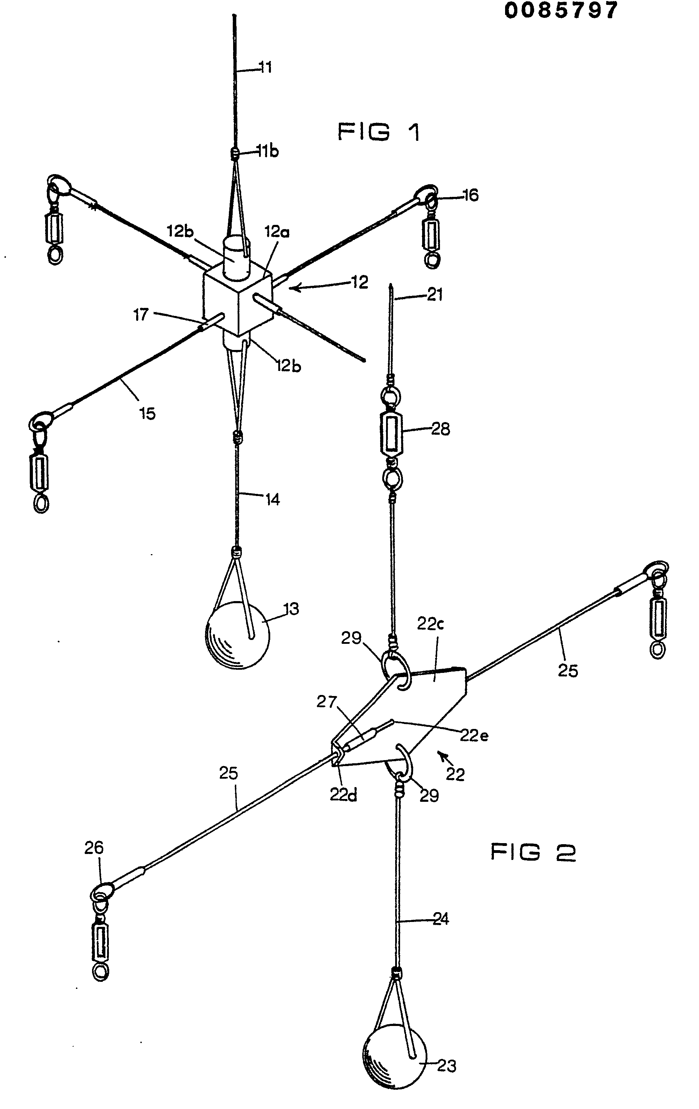

Referring to Fig. 1 the fishing line 11 shown therein terminates in a yoke 12. In the form of the invention shown in Fig. 1 the yoke 12 consists of a block 12a formed of a plastics material, non-corrodable metal or the like. The block 12a includes two bosses 12b as shown, each of which is provided with a transverse hole, through one of which the fishing line 11 can be passed and tied as at 11b to secure the block 12a to the fishing line 11, and through the other of which a line 14 may be passed to secure a sinker 13 to the yoke 12. A series of traces 15 project from the yoke 12, preferably substantially at right angles to the longitudinal axis of the fishing line 11. Each trace 15 may terminate in a swivel 16, other connecting means as is known in the art or may terminate directly in a fish hook. Preferably each trace 15 is composed of a resilient plastics material that has sufficient rigidity that the trace will tend to extend outwardly from the yoke 12 as shown in Fig. 1. Although Fig. 1 shows four traces 15 it should be understood that the use of one or more traces depending upon the particular circumstances is contemplated. Each trace 15 may be separately attached to the yoke 12 or alternatively the yoke 12 may have suitable holes (not shown in the drawings) formed through the block 12a so that opposite traces 15 may be formed by a single length of wire passed through the appropriate hole and held in place by crimping sleeves 17 on either side of the block 12a which will maintain the spatial positioning of such a one piece trace 15.

In the form of the invention shown in Fig. 2 the fishing line 21 is joined by means of an intermediate swivel 28 to a yoke generally indicated at 22. Such a swivel 28 may be incorporated with any one of the forms of the invention as desired. In the form shown in Fig. 2 the yoke 22 consists of a substantially flat member 22c which can be formed from a rigid plastics material or a substantially non-corrodable metallic material and may for instance be of a substantial diamond shape as shown in Fig. 2 or any other suitable shape as desired. The fishing lines 21 and 24 are shown in Fig. 2 as being joined to the yoke 22 by means of eyes 29 but any other means for joining the yoke 22 to the line as known in the art may be used as desired. For instance suitable holes may be formed in the member 22c and the line simply looped through the holes so that the fishing lines 21 and 24 comprise

-4-

a continuous filament. The lateral edges 22d of the member 22c are preferably cranked as indicated and are each provided with a suitable hole so that the trace 25 can be passed through the holes in the cranked ends 22d and also through a hole 22e in the manner 22c so that the trace 25 is supported by the yoke 22 to extend therefrom substantially at right angles to the longitudinal axis of the fishing lines 21 and 24, to terminate in eyes 26 to which swivels may be attached if desired. The trace 25 preferably has a sleeve 27 or sleeves crimped to the trace 25 as shown or in any other suitable manner to maintain the trace 25 in the desired spatial position.

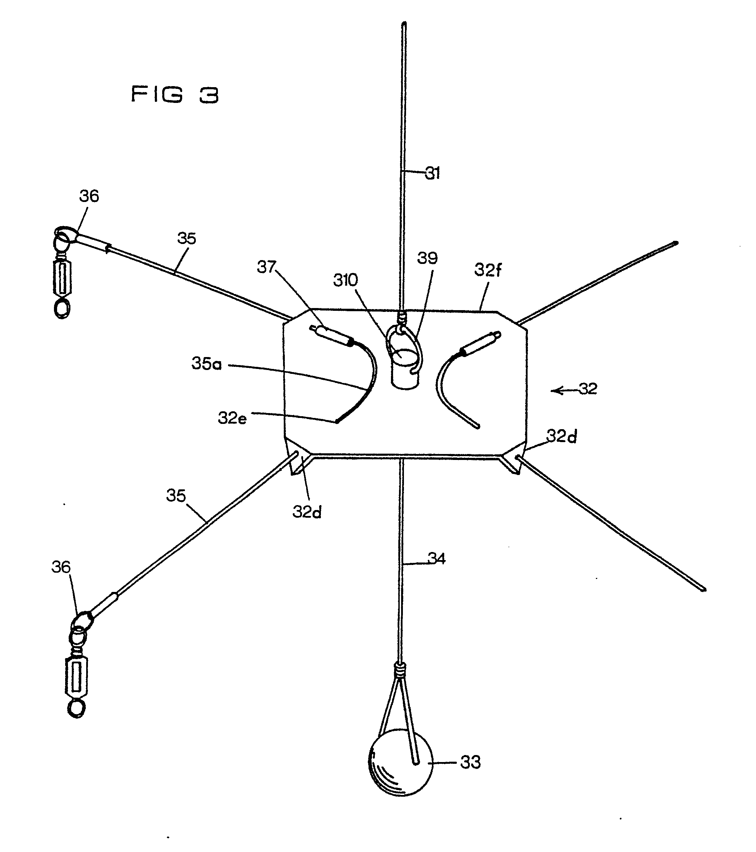

In the form of the invention shown in Fig. 3 a yoke 32 consists of a substantially flat member 32f which can be formed for instance from a rigid or semi-rigid plastics material or a non-corrodable or metallic material and which is provided with a boss 310 so that the yoke 32 can be attached to the fishing line 31 by securing the line through a suitable hole formed in the boss 310. Preferably the member 32f can swivel in relation to the boss 310. The fishing line 31 can either by passed directly through the boss 310 or may be attached to an eye 39 as shown. The boss 310 extends below the plate 32f so that the line 34 and sinker 33 can depend from the yoke 32. A portion 32d (which is preferably a corner portion as shown) of each edge of the yoke 32 is cranked as shown and is provided with a suitable hole so that a trace 35 can be passed through this hole and through a hole 32e formed in the member 32f so that the trace 35 may then be bent into the form of a part loop 35a to extend through a hole 32e and through an adjacent cranked portion 32d so that a single strand may form two traces.   A suitable crimping sleeve 37 or the like may be utilized to maintain the correct spatial relationship of the trace 35 within the yoke 32.   While for ease of manufacture a single trace 35 is preferred, nevertheless separate traces may be utilized or alternatively a one piece trace may pass diagonally across the yoke 32.

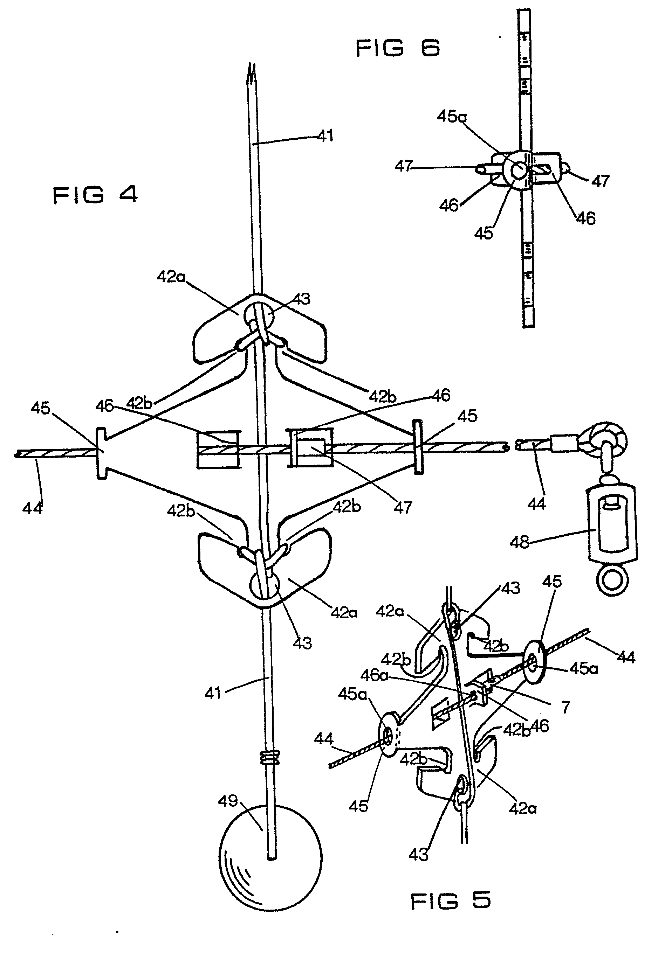

In the form of the invention shown in Figs. 4, 5 and 6 the yoke 42 is of a shape as indicated in the drawings.

The lateral edges of this yoke 42 are preferably cranked as indicated at 45 and are each provided with a suitable hole 45a so that a trace 44 can be passed through a suitable hole provided in a lug 46 projecting substantially at right angles from the body of the yoke 42 or may be separately formed and attached to the yoke if desired.

Each lug 46 is suitably positioned on the body of the yoke 42 so that each trace 44 is supported by the yoke 42 to extend therefrom preferably substantially at right angles to the longitudinal axis of the fishing line 41.

A crimping sleeve 47 or similar means of larger external diameter than the diameter of the hole 46a in the cranked lug 46 is attached to the proximal end of each trace 44 to prevent each trace 44 slipping through the hole in the cranked lug 46 or through the hole 45a in the cranked edge 45.

To further prevent movement of the trace along the lateral axis of the yoke, the holes in the cranked edge 45 and cranked lug 46 are placed out of direct horizontal alignment so that the trace 44 when passed through these holes is distorted slightly against its natural tension and will thus tend to resist movement in the lateral plane.

Alternative to the cranked lugs 46 the mounting means shown in Fig. 2 may be used.

To enable the yoke 42 to be attached to the fishing line 41 two or more holes 43 of a suitable size and shape are preferably formed in the body of the yoke 42.

A preferred method of attaching the yoke 42 to the fishing line 41 is shown in Fig. 4 and is to take a loop of the fishing line 41, thread this loop through one of the holes 43, drop the loop over the nearest arrow head shaped portion 42a of the yoke 42 and locate the line in the notches 46. This procedure may be used at both of the arrow head portions 42a and allows the yoke 42 to be attached to the fishing line 41 without requiring the fishing line to be broken, or disturbing other devices which may be attached to the line. In addition, the position of the yoke 42 may readily be adjusted along the length of the line 41 thus allowing the depth at which hooks are placed to be varied with ease.

It is envisaged that these arrow heads may be provided and this method of attaching the yoke to the line may be used in any of the forms of the invention described herein.

An alternative method of attaching the yoke 42 to the

-7-

fishing line 41 using the arrow head portions 42a is to thread the line through holes 43 and loop the line around itself as shown in Fig. 5.

Other means of attaching the yoke 42 to the fishing line 41 may be used, including knotting the line through the holes 43, swivels or the like.

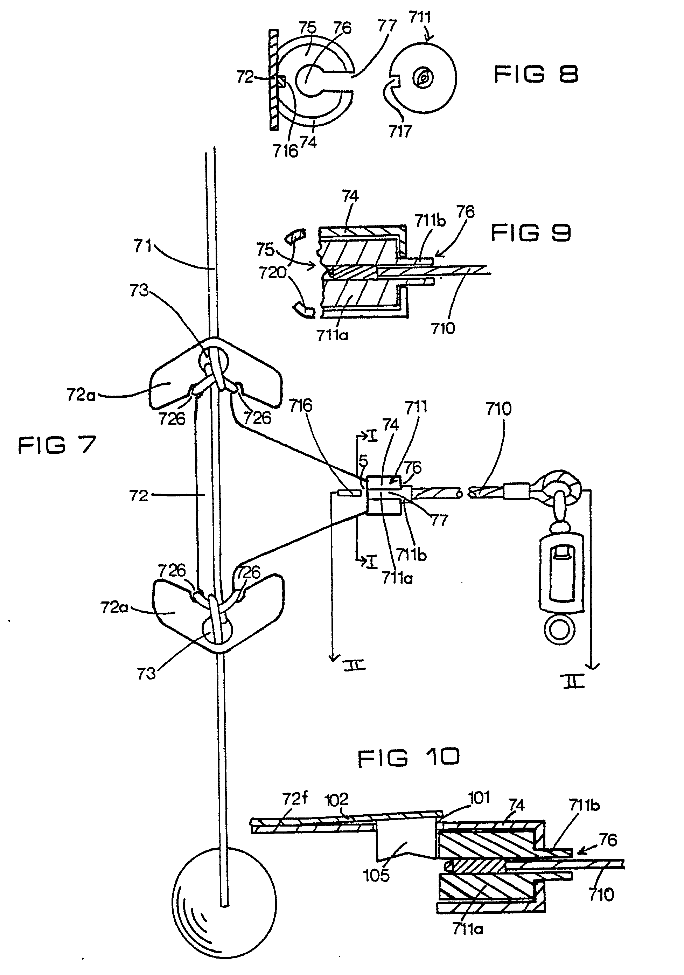

Figs. 7, 8 and 9 show a form of the invention which incorporates a preferred means for attaching a trace to the yoke. The lateral end of the yoke 72 is formed into a tubular portion 74 having a larger opening 75 at its inner end and a smaller opening 76 at its outer end. The tubular portion 74 has a slot 77 running longitudinal of its length. This tubular portion 74 may be integrally formed with the yoke 72 alternatively it may be formed separately and affixed to the yoke by way of welding, glue or any suitable method. A trace 710 extends outwardly from the yoke 72 and the distal end of the trace 710 may terminate in a loop or the like for attaching a hook, swivel or the like thereto. The proximal end of the trace has affixed firmly to it a barrel piece 711. The barrel piece 711 is composed of two portions 711a and 711b of differing diameters. Barrel section 711a is of a larger diameter than the smaller opening 76 of the tubular portion 74 but is of a smaller diameter than the larger opening 75 of the said tubular portion, so that when the trace 710 is inserted through the slot 77 of the tubular portion 74, the

-8-

barrel piece 711 positioned on the proximal end of the trace 710 may be drawn through the larger opening 75 into the tubular portion 74 but it is prevented from further movement by way of the smaller diameter opening 76. Barrel portion 711b is of a smaller diameter than the smaller opening 76 and thus when the barrel piece is positioned within the tubular portion 74 as described the barrel portion 711b will extend through the smaller opening 76 to prevent the trace from chaffing on the edges thereof. This arrangement is best illustrated in Fig. 9.

Preferably the diameter of the portion 711a of the barrel piece 711 is slightly smaller than the internal diameter of th tubular portion 74, and the diameter of the barrel section 711b of the said barrel piece 711 is slightly smaller than the diameter of the smaller opening 76.

Means to prevent the barrel piece 711 from inadvertently slipping out of the tubular portion 74 and consequently the trace 710 from becoming detached from the yoke 72 is preferably provided and in one form comprises a small ridge 716 formed on the surface of the yoke 72 adjacent the larger opening 75 of the tubular portion 74. A groove 717 is formed into the barrel section 711 longitudinal of its length and the interal shape of the groove 717 is complementary to the external shape of the ridge 716 such that when the groove 717 and ridge 716 are in alignment, the barrel piece may slide freely into and out of the tubular portion 74 but when the said groove 717 and ridge 716 are not in alignment the barrel piece 711 is held within the tubular portion 74.

Another means to prevent the barrel piece 711 from slipping out of the tubular portion 74 may be provided by way of the inner edge of the tubular portion being cranked inwardly as generally indicated by the numeral 720 in Fig. 9. The said cranked edges are only cranked slightly so that the barrel piece may be passed through these cranked edges by a slight amount of force as would be applied by a user of the device.

Yet a further means to prevent the barrel piece 711 from slipping out of the tubular portion 74 may be provided as shown in cross-section in Fig. 10. A slot 101 is formed through the yoke 72 adjacent the larger opening 75 of the tubular portion 74. A strip 102 of spring steel or other suitable material is attached to a portion of the yoke 72 as indicated at 72f so that the end of the strip 102 extends over the rear of the slot 101 and a piece 105 is attached to the strip 101 so as to extend through the slot 101 as shown. The arrangement of the strip 102 and the piece 105 forms a detent which prevents the barrel piece 711 from coming out of the tubular portion 74 unless the detent arrangement is manually disengaged by a user.

The arrangement of Figs. 7, 8 9, and 10 allows ready replacement of various traces to the yoke and if a number

- 10 -

of traces, each having a different sized hook attached,
are provided, ready variation of the hook size is enabled
by changing traces.

1. A fishing device for attaching fish hooks to a fishing line comprising a yoke adapted to be attached to the fishing line with at least one trace formed of a resilient material attached to the yoke and extending outwardly therefrom.

2. A fishing device as claimed in claim 1 wherein the yoke is of lamellar formation having an x and y axis substantially normal to each other, the said fishing line being attachable to the yoke along the x axis and wherein the trace is attachable to the yoke to extend outwardly from the yoke in a direction substantially parallel to the y axis.

3. A fishing device as claimed in claim 2 wherein at least one edge portion of the yoke is cranked and is provided with a hole to support a trace extending therethrough.

4. A fishing device as claimed in either of claims 2 or 3 wherein two traces are formed from a single piece of resilient material which extends from the yoke substantially parallel to the y axis in opposite direction through the said holes formed in the cranked portions of the yoke.

5. A fishing device as claimed in claim 5 wherein a hole is formed in a body of the yoke, the said one piece trace extending through the said hole and wherein a locating sleeve is fixed to the said one piece trace to act in conjunction with the said hole to locate the trace in the desired spatial relationship with the yoke.

6.    A fishing device as claimed in either of claims 2 or 3 wherein the proximal end of each trace extends through a hole formed in a lug projecting from the body of the yoke and terminates in a locating sleeve.

7.    A fishing device as claimed in either of claims 1 or 2 wherein each trace is detachably secured to the yoke.

8.    A fishing device as claimed in claim 7 wherein a barrel piece formed on the proximal end of each trace is adapted to be received into a locating chamber formed on the yoke to secure the trace to the yoke.

9.    A fishing device as claimed in any one of claims 2 to 8 wherein the fishing line is attachable to the yoke by means of holes formed through the yoke along the said x axis.

10.  A fishing device as claimed in claim 9 wherein an edge portion of the yoke adjacent each said hole for securing the yoke to the fishing line is shaped so that in use the fishing device may be attached to an intermediate portion of the line by passing a loop of the line through the said hole and dropping the said loop over the said shaped edge portion of the yoke.

11. A fishing device as claimed in claim 1 wherein the yoke is in the form of a block of material.

12. A fishing device substantially as hereinbefore described with reference to any one of the accompanying drawings.

1/4

0085797

FIG 1

FIG 2

FIG 3

FIG 6

FIG 4

FIG 5

**FIG 8**

**FIG 9**

**FIG 7**

**FIG 10**

European Patent Office

**EUROPEAN SEARCH REPORT**

EP 82 30 0598.8

## DOCUMENTS CONSIDERED TO BE RELEVANT

| Category | Citation of document with indication, where appropriate, of relevant passages | Relevant to claim |
|---|---|---|
| X | US – A – 2 449 692 (B.E. EICHENDORFF) <br> * entire document * <br> — | 1-3,7, 9 |
| X | US – A – 3 991 505 (S. SIMETI) <br> * column 2, line 32 to column 4, line 45; fig. 1 to 5 * <br> — | 1,2,4, 7 |
| X | US – A – 3 646 700 (R.B. POND) <br> * abstract; fig. 1 to 6 * <br> — | 1,5,11 |
| X | US – A – 2 877 593 (J.D. BALDRIDGE) <br> * column 1, line 56 to column 2, line 12; fig. 1 to 3 * <br> — | 1 |
| A | US – A – 2 733 536 (G.T. TERAZONO) <br> — | |
| A | US – A – 2 145 992 (C.R. PARKER) <br> ———— | |

**CLASSIFICATION OF THE APPLICATION (Int. Cl. 3)**

A 01 K 91/04

**TECHNICAL FIELDS SEARCHED (Int.Cl. 3)**

A 01 K 91/00

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

| X | The present search report has been drawn up for all claims | | |
|---|---|---|---|
| Place of search <br> Berlin | Date of completion of the search <br> 18-08-1982 | Examiner <br> SCHOFER | |

EPO Form 1503.1 06.78